# EUROPÄISCHE PATENTSCHRIFT

(11) **EP 2 914 876 B1**
(45) Veröffentlichungstag und Bekanntmachung des Hinweises auf die Patenterteilung: **17.04.2019**
(21) Anmeldenummer: 13788670.1
(22) Anmeldetag: 23.10.2013
(51) Int. Cl.: F16H 3/00, F16H 3/72, F16H 37/04, B60K 6/547, B60K 6/485, B60K 17/346

(54) **DOPPELKUPPLUNGSGETRIEBE**
DOUBLE CLUTCH TRANSMISSION
TRANSMISSION À DOUBLE EMBRAYAGE

(30) Priorität: 30.10.2012 DE 102012021292
(43) Veröffentlichungstag der Anmeldung: 09.09.2015
(73) Patentinhaber: Audi AG, 85045 Ingolstadt (DE)
(72) Erfinder: HEITMANN, Axel, 71229 Leonberg (DE); MÄRKL, Johann, D-86633 Neuburg a.d. Donau (DE)
(74) Vertreter: Lehle, Josef
(86) Internationale Anmeldenummer: PCT/EP2013/003185
(87) Internationale Veröffentlichungsnummer: WO 2014/067633

(56) Entgegenhaltungen:
- DE-A1-102007 022 774
- DE-A1-102010 009 832
- DE-A1-102010 046 766
- DE-A1-102011 005 029
- DE-A1-102011 089 163

## Beschreibung

Die vorliegende Erfindung betrifft Doppelkupplungsgetriebe für Kraftfahrzeuge gemäß dem Oberbegriff des Patentanspruchs 1.

Bei Geschwindigkeits-Wechselgetrieben bzw. Schaltgetrieben ist es allgemein bekannt, die Getriebespreizung sowie die Anzahl der Vorwärtsgänge dadurch zu erhöhen, dass den Zahnradsätzen der Vorwärtsgänge ein sogenanntes Vorgelege mit zum Beispiel zwei Übersetzungsstufen vorgeschaltet wird. Das Vorgelege kann zum Beispiel ein entsprechend umschaltbares Planetengetriebe sein.

Die Fig.3 der DE102011005029A1 und die Fig.8 der DE102007022774A1 offenbaren jeweils ein Doppelkupplungsgetriebe nach dem Oberbegriff des Anspruchs 1.

Aufgabe der Erfindung ist es, Doppelkupplungsgetriebe anzugeben, mittels der bei einer großen Getriebespreizung und einer baulich günstigen Konstruktion vermehrte Freiheitsgrade in der Übersetzungsauslegung erzielbar sind.

Die Lösung dieser Aufgabe gelingt mit den Merkmalen des Patentanspruchs 1. Vorteilhafte Weiterbildungen der Erfindung geben die Unteransprüche an.

Erfindungsgemäß wird vorgeschlagen, dass den Zahnradsätzen der Vorwärtsgänge ein in zwei Übersetzungsstufen umschaltbares Planetengetriebe vorgeschaltet ist, das ein angetriebenes Eingangselement, ein auf die Eingangswelle abtreibendes Ausgangselement und ein zum Umschalten der Übersetzungsstufen bremsbares oder kuppelbares Übertragungselement aufweist, wobei das Bremselement durch eine an das Übertragungselement angekoppelte Elektromaschine gebildet ist, mittels der das Übertragungselement feststellbar oder in beiden Drehrichtungen antreibbar ist. Durch die Kombination des Planetengetriebes mit der Elektromaschine kann neben der Umschaltung auf das niedrigere Übersetzungsverhältnis durch Feststellen (Bremsen) des Übertragungselements durch Überlagerung von Antriebsmoment der Elektromaschine auf das Übertragungselement des Planetengetriebes für die Vorwärtsgänge zugleich eine in einem definierten Umfang gesteuerte, variable Übersetzung gefahren werden. Ferner ersetzt die umsteuerbare Elektromaschine einen separaten Zahnradsatz für einen Rückwärtsgang, so dass das Wechselgetriebe insgesamt sehr kompakt ausgeführt sein kann. Insbesondere im Hinblick auf größere Brennkraftmaschinen-Momente ist es von Vorteil, wenn die Elektromaschine zusammen mit einem zusätzlichen Bremselement eine Bremswirkung erzeugt. Das Bremselement kann bevorzugt packageoptimiert als eine Bandbremse ausgeführt sein. Alternativ dazu ist auch der Einsatz einer anderen herkömmlichen Bremse möglich.

Das Doppelkupplungsgetriebe (gemäß Hauptanspruch) erlaubt es zudem, die E-Maschine als Anfahrelement zu nutzen. Je nach Ansteuerung der E-Maschine (beschleunigen oder verzögern) kann im verbrennungsmotorischen Betrieb vorwärts oder rückwärts angefahren werden.

In einer besonders bevorzugten Auslegung wird vorgeschlagen, dass das Planetengetriebe als Eingangselement ein erstes Sonnenrad aufweist, das mit dem Gehäuse der Trennkupplung ständig trieblich verbunden ist, dass das Planetengetriebe ferner ein zweites Sonnenrad als auf die Eingangswelle abtreibendes Ausgangselement aufweist, dass ein Steg mit Stufenplanetenrädern als Übertragungselement mit den beiden Sonnenrädern in Eingriff und auf die Trennkupplung geschaltet ist, und dass der Steg mit dem Rotor der Elektromaschine gekoppelt ist. Daraus resultiert ein einfach aufgebautes Planetengetriebe, das nur über die Trennkupplung und das Brems- oder Antriebsmoment der Elektromaschine entsprechend variabel in den Übersetzungsverhältnissen gesteuert werden kann.

Dabei kann der Rotor der Elektromaschine baulich günstig unmittelbar auf einer die Trennkupplung mit dem Steg des Planetengetriebes verbindenden Welle angeordnet und bevorzugt zwischen der Trennkupplung und dem Planetengetriebe eingeschaltet sein.

Des Weiteren kann der Durchmesser der ringförmigen Elektromaschine mit Rotor und Stator etwa dem größten Außendurchmesser (Hüllkreis) des Planetengetriebes entsprechen und zur Schaffung einer kompakten Anordnung in dem gleichen, umgebenden Getriebegehäuse angeordnet sein.

In Folge der Erfindung sind die Vorwärtsgänge der Zahnradsätze des Teilgetriebes A verdoppelt und variabel steuerbar; zugleich ist der Rückwärtsgang über einen Vorwärtsgang im Teilgetriebe A und die Elektromaschine darstellbar, während die Zahnradsätze des Teilgetriebes B einfache, über Synchronkupplungen schaltbare Vorwärtsgänge bilden.

Dazu kann in einer vorteilhaften Auslegung das Teilgetriebe A drei Zahnradsätze mit Loszahnrädern und Festzahnrädern aufweisen, über die die Vorwärtsgänge 1/2, 4/5, 7/8 schaltbar sind, während dem Teilgetriebe B die einfachen Vorwärtsgänge 3, 6, 9 zugeordnet sind. Der Zahnradsatz für den 1./2. Gang bzw. die niedrigste Übersetzung kann dabei vorteilhaft als Rückwärtsgang mitgenutzt werden.

In einer bevorzugten, getriebetechnisch einfach darstellbaren und im Wirkungsgrad günstigen Auslegung kann das vorgeschaltete Planetengetriebe durch Festsetzen des Stegs in eine niedrigere Übersetzung zur Bildung der Vorwärtsgänge 1, 4, 7 und durch Schließen der Trennkupplung K1 in eine höhere 1:1 Übersetzung zur Bildung der Vorwärtsgänge 2, 5, 8 schaltbar sein.

Zudem kann über die Elektromaschine das Übersetzungsverhältnis des Planetengetriebes bzw. das der geschalteten Vorwärtsgänge durch Drehzahlüberlagerung am Übertragungselement bzw. Steg des Planetengetriebes variabel steuerbar sein, um somit variable, ggf. von der Leistungsanforderung an der Brennkraftmaschine und/oder von unterschiedlichen Fahrprogrammen des Kraftfahrzeugs die von den Zahnradsätzen an sich fest vorgegebenen Gangsprünge (Übersetzungsabstände) kürzer oder länger zu gestalten.

Ferner kann bei geöffneter Trennkupplung und einem kleinen, geschalteten Vorwärtsgang über die Elektromaschine das Kraftfahrzeug vorwärts oder rückwärts fahrbar sein; bei geschlossener Trennkupplung und nicht geschalteten Vorwärtsgängen kann die Brennkraftmaschine des Kraftfahrzeugs startbar und schließlich insbesondere in der 1:1 Übersetzungsstufe des Planetengetriebes die Elektromaschine als Generator zur Stromerzeugung steuerbar sein.

Ein Ausführungsbeispiel der Erfindung ist im Folgenden anhand der beigefügten, schematischen Zeichnung näher erläutert. Es zeigen:
- Fig. 1: ein Blockschaltbild eines Doppelkupplungsgetriebes für Kraftfahrzeuge, mit einem vorgeschalteten Planetengetriebe und einer in das Planetengetriebe integrierten Elektromaschine; und
- Fig. 2: in skizzenhafter Darstellung das Planetengetriebe mit Elektromaschine als Einzelheit.

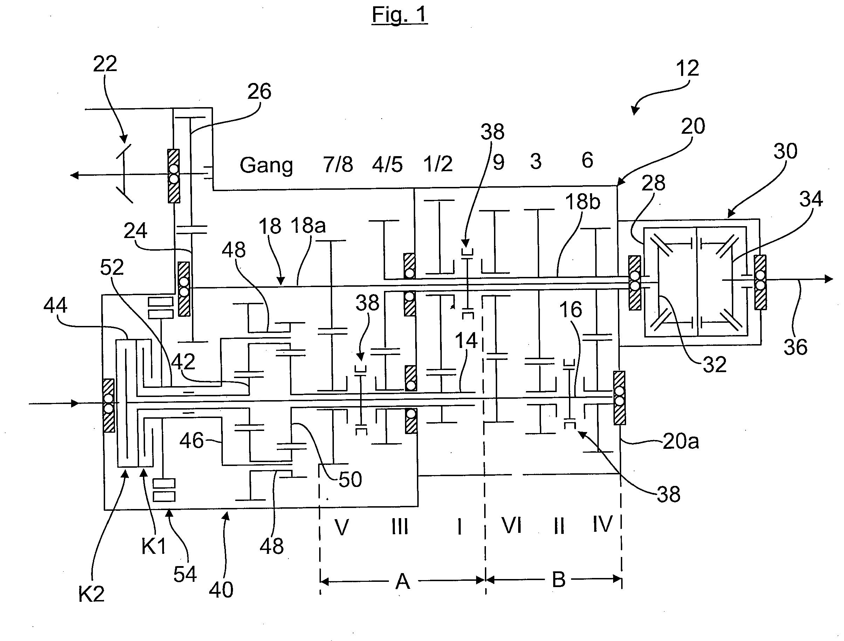

Die Fig. 1 zeigt grob schematisch ein Doppelkupplungsgetriebe 12 als Geschwindigkeits-Wechselgetriebe für Kraftfahrzeuge, mit zwei koaxialen Getriebe-Eingangswellen 14, 16, die über zwei Trennkupplungen K1, K2 mit einem antreibenden Antriebsaggregat bzw. einer Brennkraftmaschine (nicht dargestellt) trieblich verbindbar sind. Die Eingangswelle 14 ist als Hohlwelle ausgeführt.

Achsparallel zu den Eingangswellen 14, 16 ist eine Abtriebswelle 18 vorgesehen, die sich im Ausführungsbeispiel aus einer ersten Ausgangswelle 18a und einer zweiten, als Hohlwelle ausgeführten, koaxialen Ausgangswelle 18b zusammensetzt.

Die erste Ausgangswelle 18a treibt über Stirnzahnräder 24, 26 auf ein an das Getriebegehäuse 20 angebautes Vorderachsdifferenzial 22 (nur angedeutet) ab, während die zweite Ausgangswelle 18b auf das Ausgleichsgehäuse 28 eines Zwischenachsdifferenziales 30 abtreibt, dessen Abtriebselemente bzw. Achskegelräder 32, 34 einerseits mit der Ausgangswelle 18a zum Antrieb des vorderen Achsdifferenzials 22 und andererseits mit einer Abtriebswelle 36 zum Antrieb eines hinteren Achsdifferenzials (nicht dargestellt) des Kraftfahrzeugs verbunden sind.

Die dargestellte Auslegung der Abtriebswelle 18 mit dem Zwischenachsdifferenzial 30 ermöglicht es, dass einzelne Vorwärtsgänge direkt auf das vordere Achsdifferenzial abtreiben, während andere Vorwärtsgänge über das Zwischenachsdifferenzial 30 einen Allradantrieb darstellen.

Die Abtriebswelle 18 kann im Falle eines Abtriebs nur auf ein Achsdifferenzial 22 (Frontantrieb) oder über die Abtriebswelle 36 auf ein hinteres Achsdifferenzial (Heckantrieb) auch einteilig und ohne Zwischenachsdifferenzial 30 ausgeführt sein.

Die besagten Wellen 14, 16, 18, etc. sind über nur angedeutete Wälzlager in dem Getriebegehäuse 20 drehbar gelagert.

Das Doppelkupplungsgetriebe 12 ist in ein Teilgetriebe A und ein Teilgetriebe B unterteilt, wobei sich die Eingangs-Hohlwelle 14 nur innerhalb des Teilgetriebes A erstreckt, während die Eingangswelle 16 durch die Eingangswelle 14 hindurch in das Teilgetriebe B bis zu dessen Abschlusswand 20a geführt ist.

Im Teilgetriebe A sind drei Vorwärtsgang-Zahnradsätze I, III, V angeordnet, die sich in bekannter Weise aus Festzahnrädern und Loszahnrädern zusammensetzen, wobei die Loszahnräder über Synchronkupplungen (allgemein mit 38 bezeichnet) geschaltet werden können. Die Zahnradsätze I, III, V bilden die Vorwärtsgänge 1/2, 4/5, 7/8 (wird noch erläutert).

Im Teilgetriebe B sind ebenfalls drei Vorwärtsgang-Zahnradsätze II, IV und VI vorgesehen, die sich ebenfalls aus Festzahnrädern und über eine Synchronkupplung 38 schaltbaren Loszahnrädern zusammensetzen und die in der entsprechenden Übersetzungsauslegung die Vorwärtsgänge 3, 6 und 9 bilden.

Dem Teilgetriebe A ist benachbart der Doppelkupplung K1, K2 ein Planetengetriebe 40 vorgeschaltet, das koaxial zur Eingangs-Hohlwelle 14 ausgeführt ist und das von der Getriebeauslegung her in zwei Übersetzungsstufen bzw. in eine niedrigere Übersetzungsstufe und eine höhere 1:1 Übersetzungsstufe umschaltbar ist.

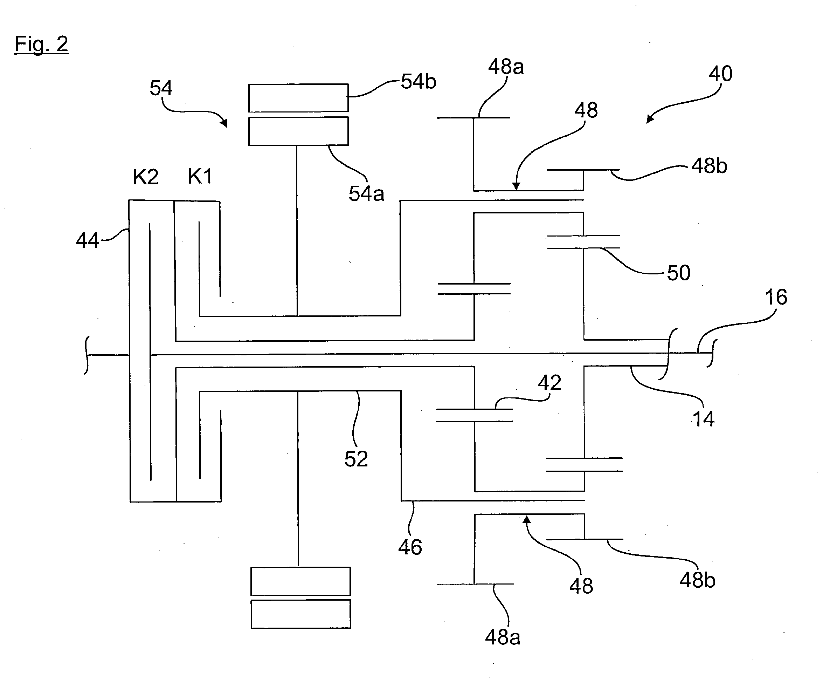

Dabei ist das Eingangselement des Planetengetriebes 40 (vgl. auch Fig. 2) durch ein erstes Sonnenrad 42 gebildet, das an das Gehäuse 44 der Doppelkupplung K1, K2 angeschlossen und somit ständig angetrieben ist.

Der Steg 46 als Übertragungselement des Planetengetriebes 40 trägt mehrere, drehbar gelagerte Stufenplanetenräder 48, von denen das eine, größere Zahnrad 48a mit dem Sonnenrad 42 kämmt und trieblich mit der Kupplung K1 verbindbar ist.

Das kleinere Zahnrad 48b der Stufenplanetenräder 48 ist mit einem zweiten Sonnenrad 50 als Ausgangselement des Planetengetriebes 40 mit der Eingangs-Hohlwelle 14 des Teilgetriebes A verbunden.

Ferner ist die den Steg 46 tragende Hohlwelle 52 an eine ringförmig ausgeführte Elektromaschine 54 angeschlossen. Dabei ist der Rotor 54a unmittelbar auf der Hohlwelle 52 befestigt, während der Stator 54b in das umgebende Getriebegehäuse 20 (Fig. 1) eingesetzt ist. Der Durchmesser der Statorwicklungen ist dabei geringfügig größer als der durch die Stufenplanetenräder 48 gebildete, größte Hüllkreis des Planetengetriebes 40. Die Elektromaschine 54 kann eine Drehstrommaschine sein, die an das elektrische Antriebssystem des Kraftfahrzeugs mit einer entsprechenden Traktionsbatterie angeschlossen ist und die sowohl als Elektromotor als auch als Generator geschaltet werden kann.

Ist die Kupplung K1 geöffnet und die Elektromaschine 54 so geschaltet, dass deren Bremsmoment den Steg 46 stillsetzt, so treibt das Sonnenrad 42 über die Stufenplanetenräder 48 das Sonnenrad 50 und dieses die Eingangswelle 14 in der niedrigeren Übersetzungsstufe an; dies entspricht bei entsprechend geschalteten Zahnradsätzen des Teilgetriebes A den Vorwärtsgängen 1 (hier wird das Anfahren des Kraftfahrzeugs durch die Elektromaschine 54 über das ausgeübte Bremsmoment gesteuert), 4 und 7. Wird die Elektromaschine 54 stromlos geschaltet, so ist die Antriebsleistung unterbrochen.

Zum Umschalten des Planetengetriebes 40 in die höhere 1:1 Übersetzungsstufe wird die Kupplung K1 geschlossen, wobei nunmehr das Sonnenrad 42 und der Steg 46 zusammengeschaltet und das Planetengetriebe 40 in sich blockiert ist. Das Antriebsmoment teilt sich über die Kupplung K1 und das Gehäuse 44 entsprechend auf. In der 1:1 Übersetzungsstufe des Planetengetriebes 40 können die Vorwärtsgänge 2, 5, 8 geschaltet werden.

Zum Schalten der Vorwärtsgänge 3, 6 und 9 des Teilgetriebes B werden in herkömmlicher Weise die Zahnradsätze II, IV oder VI über die Synchronkupplungen 38 geschaltet und über die Trennkupplung K2 aktiviert. Dabei ist die Kupplung K1 gelöst und die Elektromaschine 54 stromlos.

Neben der beschriebenen Umschaltfunktion kann die Elektromaschine 54 als Elektromotor in der Vorwärts-Drehrichtung gesteuert werden und somit dem Steg 46 ein Antriebsmoment bzw. eine Drehzahl überlagern, die den jeweils gerade über die Synchronkupplungen 38 geschalteten Vorwärtsgang (zum Beispiel 1. Gang) ein variables Übersetzungsverhältnis aufprägt, wodurch die im Teilgetriebe A über die Zahnradsätze I, II, V fest vorgegebenen Gangsprünge mehr oder minder veränderbar sind.

Die Elektromaschine 54 kann ferner in der umgekehrten Drehrichtung als Elektromotor geschaltet sein und somit bevorzugt bei geschaltetem 1. Vorwärtsgang (Zahnradsatz I) einen Rückwärtsgang bilden. Die Kupplung K1 muss dabei gelöst sein.

Des Weiteren kann die Elektromaschine 54 als Generator geschaltet sein, um im Fahrbetrieb (Rekuperationsbetrieb) des Kraftfahrzeugs, insbesondere bei geschlossener Kupplung K1, bei Bedarf Strom für die Traktionsbatterie zu erzeugen.

Schließlich kann die Elektromaschine 54 bei geschlossener Kupplung K1 sowohl im Boostbetrieb als auch zum Starten die Brennkraftmaschine (mit-) antreiben.

Die Erfindung ist nicht auf das dargestellte Ausführungsbeispiel beschränkt.

Das Wechselgetriebe kann auch als einfaches, ggf. automatisiertes Schaltgetriebe ohne Teilgetriebe B, ohne einer zweiten Trennkupplung K2 und ohne einer zweiten Eingangswelle 16 ausgeführt sein. Die Eingangswelle 14 könnte dann als Einzelwelle die erforderlichen Vorwärtsgang-Zahnradsätze (auch mehr oder weniger als beschrieben) tragen.

## Patentansprüche

1. Doppelkupplungsgetriebe für Kraftfahrzeuge, mit zwei koaxialen Eingangswellen (14, 16), nämlich einer ersten Eingangswelle (14), die eine Hohlwelle ist, und einer zweiten Eingangswelle (16), wobei die zwei Eingangswellen (14, 16) über zwei Trennkupplungen (K1, K2) aktivierbar sind und über ein Teilgetriebe A mit Vorwärtsgängen und ein Teilgetriebe B mit Vorwärtsgängen auf zumindest eine achsparallele Abtriebswelle (18) wirken, wobei über eine erste (K1) der zwei Trennkupplungen (K1, K2) die erste Eingangswelle (14) und über eine zweite (K2) der zwei Trennkupplungen (K1, K2) die zweite Eingangswelle (16) aktivierbar ist und wobei auf den Wellen (14, 16, 18) Zahnradsätze mit Festzahnrädern und über Synchronkupplungen (38) schaltbaren Loszahnrädern zur Bildung der Vorwärtsgänge angeordnet sind, **dadurch gekennzeichnet, dass** den Zahnradsätzen der Vorwärtsgänge des Teilgetriebes A ein in zwei Übersetzungsstufen umschaltbares Planetengetriebe (40) vorgeschaltet ist, das ein angetriebenes Eingangselement (42), ein auf die Eingangswelle (14) des Teilgetriebes A abtreibendes Ausgangselement (50) und ein zum Umschalten der Übersetzungsstufen bremsbares oder kuppelbares Übertragungselement (46) aufweist, wobei das Übertragungselement (46) an eine Elektromaschine (54) angekoppelt ist, mittels der das Übertragungselement (46) feststellbar oder in beiden Drehrichtungen antreibbar ist.

2. Doppelkupplungsgetriebe nach Anspruch 1, **dadurch gekennzeichnet, dass** das Planetengetriebe (40) als Eingangselement ein erstes Sonnenrad (42) aufweist, das mit einem Gehäuse (44) der zwei Trennkupplungen (K1, K2) ständig trieblich verbunden ist, dass das Planetengetriebe (40) ferner ein zweites Sonnenrad (50) als auf die erste Eingangswelle (14) abtreibendes Ausgangselement aufweist, dass ein Steg (46) mit Stufenplanetenrädern (48) als Übertragungselement mit den beiden Sonnenrädern (42, 50) in Eingriff ist und auf die erste Trennkupplung (K1) geschaltet ist, und dass der Steg (46) mit dem Rotor (54a) der Elektromaschine (54) gekoppelt ist.

3. Doppelkupplungsgetriebe nach Anspruch 1 oder 2, **dadurch gekennzeichnet, dass** der Rotor (54a) der Elektromaschine (54) unmittelbar auf einer die erste Trennkupplung (K1) mit dem Steg (46) des Planetengetriebes (40) verbindenden Welle (52) angeordnet ist.

4. Doppelkupplungsgetriebe nach einem der vorhergehenden Ansprüche, **dadurch gekennzeichnet, dass** die Elektromaschine (54) baulich zwischen der ersten Trennkupplung (K1) und dem Planetengetriebe (40) eingeschaltet ist.

5. Doppelkupplungsgetriebe nach einem der vorhergehenden Ansprüche, **dadurch gekennzeichnet, dass** der Durchmesser der ringförmigen Elektromaschine (54) mit Rotor (54a) und Stator (54b) etwa dem größten Außendurchmesser des Planetengetriebes (40) entspricht und in dem gleichen, umgebenden Getriebegehäuse (20) angeordnet ist.

6. Doppelkupplungsgetriebe nach einem der vorhergehenden Ansprüche, **dadurch gekennzeichnet, dass** das Teilgetriebe A drei Zahnradsätze (I, III, V) mit Loszahnrädern und Festzahnrädern aufweist, über die die Vorwärtsgänge 1/2, 4/5, 7/8 schaltbar sind, während dem Teilgetriebe B die einfachen Vorwärtsgänge 3, 6, 9 zugeordnet sind.

7. Doppelkupplungsgetriebe nach einem der vorhergehenden Ansprüche, **dadurch gekennzeichnet, dass** das vorgeschaltete Planetengetriebe (40) durch Festsetzen des Stegs (46) in eine niedrigere Übersetzung zur Bildung der Vorwärtsgänge 1, 4, 7 und durch Schließen der ersten Trennkupplung (K1) in eine höhere 1:1-Übersetzung zur Bildung der Vorwärtsgänge 3, 9, 6 schaltbar ist.

8. Doppelkupplungsgetriebe nach einem der vorhergehenden Ansprüche, **dadurch gekennzeichnet, dass** über die Elektromaschine (54) das Übersetzungsverhältnis des Planetengetriebes (40) bzw. das der geschalteten Vorwärtsgänge durch Drehzahlüberlagerung am Übertragungselement bzw. Steg (46) des Planetengetriebes (40) variabel steuerbar ist.

9. Doppelkupplungsgetriebe nach einem der vorhergehenden Ansprüche, **dadurch gekennzeichnet, dass** bei geöffneter erster Trennkupplung (K1) und einem kleinen, geschalteten Vorwärtsgang über die Elektromaschine (54) das Kraftfahrzeug vorwärts oder rückwärts fahrbar ist.

10. Doppelkupplungsgetriebe nach einem der vorhergehenden Ansprüche, **dadurch gekennzeichnet, dass** bei geschlossener erster Trennkupplung (K1) und nicht geschalteten Vorwärtsgängen die Brennkraftmaschine des Kraftfahrzeugs startbar ist.

11. Doppelkupplungsgetriebe nach einem der vorhergehenden Ansprüche, **dadurch gekennzeichnet, dass** insbesondere in der 1:1-Übersetzungsstufe des Planetengetriebes (40) die Elektromaschine (54) als Generator zur Stromerzeugung steuerbar ist.

12. Doppelkupplungsgetriebe nach einem der vorhergehenden Ansprüche, **dadurch gekennzeichnet, dass** zusätzlich ein Bremselement vorgesehen ist, das insbesondere bei größeren Brennkraftmaschinen-Momenten zusammen mit der Elektromaschine (54) eine Bremswirkung erzeugt.

## Claims

1. Double clutch transmission for motor vehicles having two coaxial input shafts (14, 16), specifically a first input shaft (14) which is a hollow shaft and a second input shaft (16), wherein the two input shafts (14, 16) can be activated via two separating clutches (K1, K2) and act via a sub transmission A with forward gears and a sub transmission B with reverse gears on at least one axially parallel output shaft (18), wherein via a first (K1) of the two separating clutches (K1, K2) the first input shaft (14) can be activated and via a second (K2) of the two separating clutches (K1, K2) the second input shaft (16) can be activated and wherein on the shafts (14, 16, 18) are disposed gearwheel sets having fixed gear wheels and idler gears which can be switched via synchronised clutches (38) for the formation of the forward gears, **characterised in that** a planetary gear mechanism (40) which can be switched to two translation levels is connected upstream of the gearwheel sets of the forward gears of the sub transmission A, which planetary gear mechanism has a driven input element (42), an output element which outputs to the input shaft (14) of the sub transmission A and a transmission element (46), which can be braked or coupled in order to switch over the transmission stages, wherein the transmission element (46) is coupled to an electric machine (54) by means of which the transmission element (46) is able to be fixed or is able to be driven in both rotational directions.

2. Double clutch transmission according to claim 1, **characterised in that** the planetary gear mechanism (40) as input element has a first sun wheel (42) which is continuously drivingly connected with the housing (44) of the two separating clutches (K1, K2), that the planetary gear mechanism (40) has furthermore a second sun wheel (50) as output element outputting onto the first input shaft (14), that a ridge (46) having stepped planetary wheels (48) as transmission element engages with the two sun wheels (42, 50) and is switched onto the first separating clutch (K1), and that the ridge (46) is coupled with the rotor (54a) of the electric machine (54).

3. Double clutch transmission according to claim 1 or 2, **characterised in that** the rotor (54a) of the electric machine (54) is arranged directly on a shaft (52) connecting the first separating clutch (K1) with the ridge (46) of the planetary gear mechanism (40).

4. Double clutch transmission according to any of the preceding claims, **characterised in that** the electric machine (54) is structurally interpolated between the first separating clutch (K1) and the planetary gear mechanism (40).

5. Double clutch transmission according to any of the preceding claims, **characterised in that** the diameter of the ring-shaped electric machine (54) with rotor (54a) and stator (54b) is approximately equal to the greatest external diameter of the planetary gear mechanism (40) and is arranged in the same surrounding gear housing (20).

6. Double clutch transmission according to any of the preceding claims, **characterised in that** the sub transmission A has three gear sets (I, III, V) having idler gears and fixed gearwheels, via which the forward gears 1/2, 4/5, 7/8 can be switched, while the single forward gears 3, 6, 9 are assigned to the sub transmission B.

7. Double clutch transmission according to any of the preceding claims, **characterised in that** the planetary gear mechanism (40) mounted upstream is switchable by means of fixing the ridge (46) into a lower translation for forming the forward gears 1, 4, 7 and by means of closing the first separating clutch (K1) into a higher 1:1 translation for forming the forward gears 3, 9, 6.

8. Double clutch transmission according to any of the preceding claims, **characterised in that** by means of the electric machine (54) the translation ratio of the planetary gear mechanism (40) or that of the switched forward gears is variably controllable by means of superimposing rotational speeds on the transmission element or ridge (46) of the planetary gear mechanism (40).

9. Double clutch transmission according to any of the preceding claims, **characterised in that** in the case of an opened first separating clutch (K1) and a low, switched forward gear via the electric machine (54) the motor vehicle can be driven forward or in reverse.

10. Double clutch transmission according to any of the preceding claims, **characterised in that** in the case of a closed first separating clutch (K1) and non-switched forward gears the internal combustion engine of the motor vehicle can be started.

11. Double clutch transmission according to any of the preceding claims, **characterised in that** in particular in the 1:1 translation step of the planetary gear mechanism (40) the electric machine (54) is controllable as a generator for the generation of electricity.

12. Double clutch transmission according to any of the preceding claims, **characterised in that** additionally a brake element is provided, which, in particular in the case of larger internal combustion engine torques together with the electric machine (54) generates a braking effect.

## Revendications

1. Boîte de vitesses à double embrayage pour des véhicules automobiles, avec deux arbres d'entrée (14, 16) coaxiaux, à savoir un premier arbre d'entrée (14), qui est un arbre creux, et un second arbre d'entrée (16), dans laquelle les deux arbres d'entrée (14, 16) peuvent être activés par l'intermédiaire de deux embrayages de séparation (K1, K2) et agissent sur au moins un arbre de sortie (18) axialement parallèle par l'intermédiaire d'une boîte de vitesses partielle A avec des marches avant et une boîte de vitesses partielle B avec des marches avant, dans laquelle le premier arbre d'entrée (14) peut être activé par l'intermédiaire d'un premier (K1) des deux embrayages de séparation (K1, K2) et le second arbre d'entrée (16) peut être activé par l'intermédiaire d'un second (K2) des deux embrayages de séparation (K1, K2) et dans laquelle des essieux dentés, avec des roues dentées fixes et des roues dentées lâches pouvant être commutées par l'intermédiaire d'embrayages synchrones (38), sont disposés sur les arbres (14, 16, 18) pour former les marches avant, **caractérisée en ce qu'en** amont des essieux dentés des marches avant de la boîte de vitesses partielle A est installé un engrenage planétaire (40) pouvant être commuté dans deux paliers de démultiplication, qui présente un élément d'entrée (42) entraîné, un élément de sortie (50) exerçant une action de sortie sur l'arbre d'entrée (14) de là boîte de vitesses partielle A et un élément de transmission (46) pouvant être freiné ou couplé pour commuter les paliers de démultiplication, dans laquelle l'élément de transmission (46) est accouplé à une machine électrique (54), au moyen duquel l'élément de transmission (46) peut être immobilisé ou peut être entraîné dans deux directions de rotation.

2. Boîte de vitesses à double embrayage selon la revendication 1, **caractérisée en ce que** l'engrenage planétaire (40) présente en tant qu'élément d'entrée une première roue solaire (42), qui est reliée cinématiquement en permanence à un boîtier (44) des deux embrayages de séparation (K1, K2), que l'engrenage planétaire (40) présente en outre une deuxième roue solaire (50) en tant qu'élément de sortie exerçant une action de sortie sur le premier arbre d'entrée (14), qu'une nervure (46) est en prise avec des satellites à paliers (48) en tant qu'élément de transmission avec les deux roues solaires (42, 50) et est commutée sur le premier embrayage de séparation (K1), et que la nervure (46) est couplée au rotor (54a) de la machine électrique (54).

3. Boîte de vitesses à double embrayage selon la revendication 1 ou 2, **caractérisée en ce que** le rotor (54a) de la machine électrique (54) est disposé directement sur un arbre (52) reliant le premier embrayage de séparation (K1) à la nervure (46) de l'engrenage planétaire (40).

4. Boîte de vitesses à double embrayage selon l'une quelconque des revendications précédentes, **caractérisée en ce que** la machine électrique (54) est montée de manière structurelle entre le premier embrayage de séparation (K1) et l'engrenage planétaire (40).

5. Boîte de vitesses à double embrayage selon l'une quelconque des revendications précédentes, **caractérisée en ce que** le diamètre de la machine électrique (54) de forme annulaire avec le rotor (54a) et le stator (54b) correspond à peu près au diamètre extérieur le plus grand de l'engrenage planétaire (40) et est disposé dans le même boîtier de boîte de vitesses (20) l'entourant.

6. Boîte de vitesses à double embrayage selon l'une quelconque des revendications précédentes, **caractérisée en ce que** la boîte de vitesses partielle A présente trois essieux dentés (I, III, V) avec des roues dentées lâches et des roues dentées fixes, par l'intermédiaire desquelles les marches avant 1/2, 4/5, 7/8 peuvent être commutées tandis que les simples marches avant 3, 6, 9 sont associées à la boîte de vitesses partielle B.

7. Boîte de vitesses à double embrayage selon l'une quelconque des revendications précédentes, **caractérisée en ce que** l'engrenage planétaire (40) installé en amont peut être commuté dans une démultiplication plus basse pour former les marches avant 1, 4, 7 en fixant la nervure (46) et dans une démultiplication 1:1 plus importante pour former les marches avant 3, 9, 6 en fermant le premier embrayage de séparation (K1).

8. Boîte de vitesses à double embrayage selon l'une quelconque des revendications précédentes, **caractérisée en ce que** le rapport de démultiplication de l'engrenage planétaire (40) ou celui des marches avant commutées peut être commandé de manière variable par l'intermédiaire de la machine électrique (54) par la superposition de vitesses de rotation au niveau de l'élément de transmission ou de la nervure (46) de l'engrenage planétaire (40).

9. Boîte de vitesses à double embrayage selon l'une quelconque des revendications précédentes, **caractérisée en ce que** le véhicule automobile peut être déplacé vers l'avant ou vers l'arrière par l'intermédiaire de la machine électrique (54) lorsque le premier embrayage de séparation (K1) est ouvert et lorsqu'une petite marche avant est commutée.

10. Boîte de vitesses à double embrayage selon l'une quelconque des revendications précédentes, **caractérisée en ce que** la machine à combustion interne du véhicule automobile peut être démarrée lorsque le premier embrayage de séparation (K1) est fermé et que les marches avant ne sont pas commutées.

11. Boîte de vitesses à double embrayage selon l'une quelconque des revendications précédentes, **caractérisée en ce qu'**en particulier la machine électrique (54) peut être commandée en tant que générateur pour la production de courant en particulier dans le palier de démultiplication de 1:1 de l'engrenage planétaire (40).

12. Boîte de vitesses à double embrayage selon l'une quelconque des revendications précédentes, **caractérisée en ce qu'**en supplément un élément de freinage est prévu, qui produit une action de freinage conjointement avec la machine électrique (54) en particulier lorsque des couples de machine à combustion interne plus importants existent.
